Europäisches Patentamt

European Patent Office

Office européen des brevets

(19)

(11) **EP 1 347 525 A1**

(12) **EUROPEAN PATENT APPLICATION**
published in accordance with Art. 158(3) EPC

(43) Date of publication:
24.09.2003 Bulletin 2003/39

(51) Int Cl.⁷: **H01M 4/86**, H01M 4/88,
H01M 8/02, C25B 11/03,
C25B 1/30

(21) Application number: 01272912.5

(22) Date of filing: 28.12.2001

(86) International application number:
PCT/JP01/11601

(87) International publication number:
WO 02/054514 (11.07.2002 Gazette 2002/28)

(84) Designated Contracting States:
AT BE CH CY DE DK ES FI FR GB GR IE IT LI LU
MC NL PT SE TR

(30) Priority: 28.12.2000 JP 2000401189

(71) Applicant: Sony Corporation
Tokyo 141-0001 (JP)

(72) Inventors:
• KATORI, Kenji, Sony Corporation
  Shinagawa-ku, Tokyo 141-0001 (JP)
• SHIRAI, Katsuya, Sony Corporation
  Shinagawa-ku, Tokyo 141-0001 (JP)

(74) Representative: Müller - Hoffmann & Partner
Patentanwälte,
Innere Wiener Strasse 17
81667 München (DE)

(54) **GAS DIFFUSIVE ELECTRODE, ELECTROCONDUCTIVE ION CONDUCTOR, THEIR MANUFACTURING METHOD, AND ELECTROCHEMICAL DEVICE**

(57) Provided is a gas diffusion electrode, an electrically conductive ionic conductor which are capable of having electronic conductivity and ion conductivity, a method of producing the same, and an electrochemical device. An electrically conductive ionic conductor (5) comprises electrically conductive powder (1) having an ion conductive group (2) bonded thereto. The electrically conductive ionic conductor (5) is produced through bonding the ion conductive group (2) to the electrically conductive powder (1) by chemical treatment. A gas diffusion electrode comprises the electrically conductive ionic conductor (5), and the gas diffusion electrode is used as at least one of a positive electrode and a negative electrode in an electrochemical device such as a fuel cell.

FIG. 1A

EP 1 347 525 A1

FIG. 1B

FIG. 1C

## Description

TECHNICAL FIELD

The present invention relates to a gas diffusion electrode, an electrically conductive ionic conductor, a method of producing the same, and an electrochemical device.

BACKGROUND ART

As an electrode in an electrochemical device such as a fuel cell, a gas diffusion electrode is used. Conventionally, the gas diffusion electrode is produced through a process that catalyst particles made of platinum supported on carbon as a catalyst mixed with a water-repellent resin such as a fluorocarbon resin, etc. and an ionic conductor is formed into a sheet shape (Japanese Unexamined Patent Application Publication No. Hei 5-36418), or a process that the catalyst particles are applied on a carbon sheet.

When the gas diffusion electrode are used as an electrode for hydrogen decomposition in a fuel cell such as a solid polymer type fuel cell, in the electrode, a hydrogen fuel ($H_2$) in the form of gas applied to the electrode is ionized by a platinum catalyst, then generated electrons flow through carbon, and protons ($H^+$) generated from hydrogen flow into an ion conductive film via an ionic conductor. Therefore, such an electrode requires an electrically conductive material such as carbon, a catalyst for ionizing a fuel or an oxidizer, and an ionic conductor as components, and gaps for conducting a gas therethrough.

In a typical producing method, firstly, a solution containing ionized platinum is prepared, and after carbon power is immersed in the solution, reduction and heat treatment are carried out. Thereby, catalyst particles which are platinum in a fine-particle shape deposited on the carbon power are formed. Next, the catalyst particles are mixed with the ionic conductor, and then the mixture is kneaded and applied. Thus, an electrode mixedly comprising the ionic conductor, the electrically conductive powder and the catalyst is formed (Japanese Patent No. 2879649).

However, in such a conventional producing method, reduction and heat treatment are required to support platinum on the carbon powder, and there is a problem, for example, that when the temperature of the heat treatment is too low, the crystallinity of platinum will become worse, thereby good catalyst properties cannot be obtained.

Moreover, after platinum is supported on the carbon powder, the ionic conductor is mixed therewith, thereby the platinum catalyst is covered with the ionic conductor, so almost no contact area with a supplied gas is present. As the platinum. catalyst functions as a catalyst only in part which contacts with the gas, in such a state that the gas is blocked by the ionic conductor, the platinum catalyst cannot effectively function.

In view of forgoing, it is an object of the present invention to provide an electrically conductive ionic conductor and a gas diffusion electrode capable of having electronic conductivity and ion conductivity, a method of producing the same, and an electrochemical device.

DISCLOSURE OF THE INVENTION

An electrically conductive ionic conductor according to the present invention comprises electrically conductive powder having an ion conductive group bonded thereto, or electrically conductive powder having an ionic conductor deposited thereon. Further, a gas diffusion electrode according to the invention comprises the electrically conductive ionic conductor of the invention.

A method of producing an electrically conductive ionic conductor according to the invention comprises the step of bonding an ion conductive group to electrically conductive powder by chemical treatment; or depositing an ion conductor on electrically conductive powder. Further, a method of producing a gas diffusion electrode according to the invention comprises the step of containing at least a catalyst in the electrically conductive ionic conductor of the invention.

Moreover, an electrochemical device according to the invention comprises a positive electrode and a negative electrode, wherein at least one of the positive electrode and the negative electrode is the gas diffusion electrode according to the invention.

The electrically conductive ionic conductor according to the invention has electronic conductivity and ion conductivity, so ions such as electrons and protons ($H^+$) can be effectively conducted.

Further, the gas diffusion electrode according to the invention comprises the electrically conductive ionic conductor of the invention, so another ionic conductor is not required as an electrode material, and generated ions such as electrons and protons ($H^+$) can be effectively conducted. In addition, when a catalyst is contained so as to be supported on a surface of the electrically conductive ionic conductor of the invention, the gas contact area of the catalyst will become larger.

Further, in the method of producing an electrically conductive ionic conductor according to the invention, the ion conductive group is bonded to the electrically conductive powder through chemical treatment, so the ion conductive group is stably maintained in the produced electrically conductive ionic conductor.

Moreover, in the electrochemical device according to the invention, at least one of the positive electrode and the negative electrode is the gas diffusion electrode of the invention, so the efficiency of electrode reaction can be improved, and the output properties can be substantially improved.

Other and further objects, features and advantages of the invention will appear more fully from the following description.

BRIEF DESCRIPTION OF THE DRAWINGS

FIGs. 1A to 1C are cross-sectional views showing structures and states of an electrically conductive ionic conductor according to an embodiment of the invention.
FIG. 2 is a schematic cross-sectional view for explaining a step of depositing a catalyst on an electrically conductive ionic conductor.
FIGs. 3A and 3B are illustrations of the structures of polyhydroxylated fullerene which can be used as electrically conductive powder shown in FIG. 1A.
FIGs. 4A and 4B are schematic diagrams showing examples of the structure of a fullerene derivative used as the electrically conductive powder shown in FIG. 1A.
FIG. 5 is a schematic diagram of a fuel cell according to the embodiment of the invention.
FIG. 6 is a schematic diagram of a hydrogen peroxide producing apparatus according to the embodiment of the invention.

BEST MODE FOR CARRYING OUT THE INVENTION

The present invention is described below in more detail based on an embodiment of the invention.

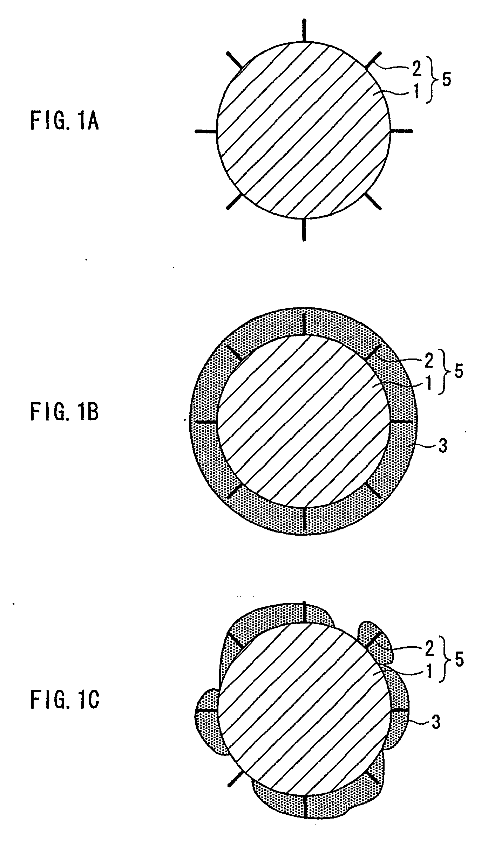

FIG. 1A shows a cross-sectional view of an electrically conductive ionic conductor 5 according to the embodiment of the invention. The electrically conductive ionic conductor 5 is comprised by adding an ion conductive group 2 to electrically conductive powder 1 by a chemical bond, so the electrically conductive ionic conductor 5 has electronic conductivity and ion conductivity. Therefore, when the electrically conductive ionic conductor 5 is used, for example, as a material of a gas diffusion electrode used for a fuel cell, etc., electrons or hydrogen ions in the electrode can be smoothly conducted. Further, when the ion conductive group 2 is simply deposited on the electrically conductive powder 1, the ion conductive group 2 is easily removed from the electrically conductive powder 1, although in this case, the ion conductive group 2 is bonded through chemical treatment, so the state that the ion conductive group 2 is added to the electrically conductive powder 1 is stably maintained.
In terms of gas diffusion, the particle diameter of the electrically conductive powder 1 is preferably within a range from 1 nm to 10 nm, and in terms of a reduction in the internal resistance of a cell, the electrical resistance thereof is preferably $10^{-3}$ $\square$ ·m or less.
As the electrically conductive powder 1, for example, at least one kind selected from the group consisting of carbon, ITO (indium tin oxide: a conductive oxide which is indium oxide doped with tin) and tin oxide can be used. As carbon, there is acetylene black, a carbon nanotube (CNT) or a carbon fiber (CF), etc.
When carbon is used as the electrically conductive powder 1, the larger the oil absorption of carbon (which exhibits porosity) is, the more the output when the electrically conductive powder 1 is applied to an electrochemical device to be described later increases, so the larger the oil absorption of carbon is the more preferable. In order to obtain a preferable output, it is preferable that the oil absorption is 200 ml/100 g or over (the specific surface area is 300 $m^2$/g or over).
As such a material, a carbon nanotube and a carbon fiber having a larger surface area and higher electronic conductivity are preferably used.
Moreover, when the ion conductive group 2 is excessively bonded to the electrically conductive powder 1, the electronic conductivity of the electrically conductive powder 1 may be impaired, so the amount of bonding is required to be adjusted as necessary.
Therefore, the bonding amount of the ion conductive group 2 to the electrically conductive powder 1 through chemical treatment is preferably within a range from 0.001 mol to 0.3 mol per mol of the material of the electrically conductive powder 1.
For example, when the electrically conductive powder 1 is made of a graphite-based carbon material, the bonding amount of the ion conductive group 2 is preferably within a range from 0.001 mol to 0.1 mol, more preferably from 0.003 mol to 0.05 mol, and most preferably from 0.005 mol to 0.02 mol per mol of the electrically conductive powder 1.
Further, when the electrically conductive powder 1 is made of ITO or tin oxide, the bonding amount of the ion conductive group 2 is preferably within a range from 0.001 mol to 0.3 mol, more preferably from 0.01 mol to 0.15 mol, and most preferably 0.015 mol to 0.06 mol per mol of the electrically conductive powder 1.
In either case, when the bonding amount of the ion conductive group 2 to the electrically conductive powder 1 is less than the above range, sufficient in conductivity may not be able to be obtained. On the other hand, when the bonding amount is more than the above range, higher ion conductivity can be obtained, although electronic conductivity may be impaired.
The ion conductive group 2 is preferably a proton dissociation group, for example, any one selected from the group consisting of -OH, $-OSO_3H$, COOH, $-SO_3H$ and $-OPO(OH)_2$. A term "proton dissociation group" herein means a functional group from which protons can be dissociated through ionization, and a term "dissociation of proton ($H^+$)" means that protons are dissociated from the functional group through ionization.
Such an electrically conductive ionic conductor 5 can be a material of, for example, a gas diffusion electrode. In this case, a catalyst for ionizing a fuel gas is preferably deposited on a surface of the electrically conductive ionic conductor 5.
The catalyst is preferably deposited at a rate of 10% by weight to 1000% by weight of the electrically conductive ionic conductor 5. Further, the catalyst is preferably metal having electronic conductivity, such as platinum, ruthenium, vanadium, tungsten, etc. or a mixture thereof.

Moreover, a method of depositing the catalyst on the electrically conductive ionic conductor 5 is not specifically limited. However, for example, when liquid-phase deposition is used, in order to achieve high crystallinity of a catalyst 3, thermal reduction treatment must be carried out, but the ion conductive group 2 generally has low heat resistance, so the ion conductive group 2 may suffer deterioration due to heating. Therefore, physical vapor deposition such as a sputtering method, a pulse laser deposition (PLD) method or a vacuum evaporation method, etc. is preferably used.

FIG. 1B shows an illustration of the electrically conductive ionic conductor in a state that the catalyst is deposited on a surface thereof through the physical vapor deposition.

When such physical vapor deposition is used, compared with the liquid-phase deposition, the catalyst 3 with higher crystallinity can be deposited on the surface of the electrically conductive ionic conductor 5 at a lower temperature without impairing the performance of the ion conductive group 2. Further, in the case of the liquid-phase deposition, the catalyst 3 in a spherical shape is deposited on the electrically conductive ionic conductor 5, and on the other hand, in the case of the physical vapor deposition, the catalyst 3 is deposited so as to coat particles of the electrically conductive ionic conductor 5, thereby better catalysis can be obtained by a smaller amount of catalyst. Also, the specific surface area of the catalyst 3 becomes larger, so that the catalytic activities are improved.

For example, in Japanese Translation of PCT Publication No. Hei 11-510311, a technique that noble metal which acts as the catalyst is deposited on a carbon sheet through the sputtering method is disclosed. Compared with the above case, the specific surface area of the catalyst 3 becomes larger, so that the catalytic activities can be improved.

Further, as shown in FIG. 1C, the catalyst 3 may be unevenly coated on the surface of the electrically conductive ionic conductor 5. Even in this case, the same effects and advantages as those of the powder shown in FIG. 1B can be obtained.

Moreover, as the physical vapor deposition, the sputtering method allows easier production, so the productivity is higher, and the film-forming properties are better. Also, in the pulse laser deposition method, it is easy to control film deposition, so the film-forming properties are better.

Further, when the catalyst 3 is deposited on the surface of the electrically conductive ionic conductor 5 through the physical vapor deposition, vibrations are preferably applied to the electrically conductive ionic conductor 5 so as to sufficiently and evenly deposit the catalyst 3 thereon. A mechanism for creating vibrations is not specifically limited, but, for example, sonic waves are preferably applied to create vibrations.

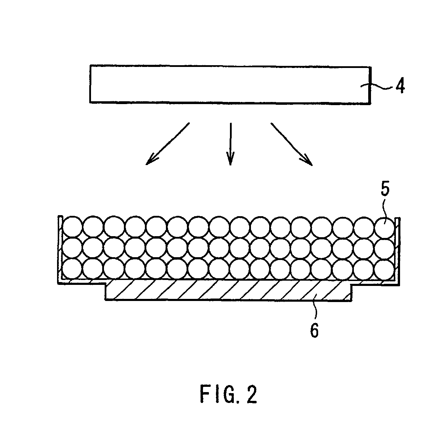

FIG. 2 shows an illustration for explaining a step of applying vibrations to the electrically conductive ionic conductor when the catalyst is deposited on the surface of the electrically conductive ionic conductor through the sputtering method.

In this case, platinum (Pt) as the catalyst 3 is supplied from a Pt target 4 to be deposited on the surface of the electrically conductive ionic conductor 5 to which vibrations are applied by an ultrasonic transducer 6. The vibration frequency of the ultrasonic transducer 6 is, for example, 40 kHz, but it may be a lower frequency, that is, on the order of a few tens of Hz (for example, 30 to 40 Hz). Although the case where the catalyst 3 is deposited through the sputtering method is described as an example, even in the case of the pulse laser deposition method or the vacuum evaporation method, the catalyst 3 is preferably deposited while applying vibrations

Thus, after the catalyst 3 is deposited on the electrically conductive ionic conductor 5, for example, the catalyst 3 deposited on the electrically conductive ionic conductor 5 is bound by, for example, a resin, and molded to form a gas diffusion electrode. The obtained gas diffusion electrode can be suitably used for various electrochemical devices such as a fuel cell, etc.

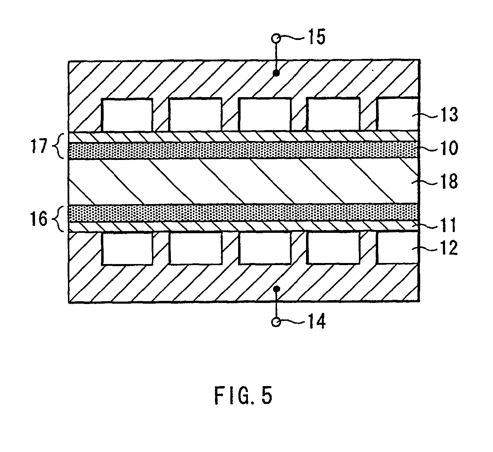

FIG. 5 shows an illustration of the structure of a fuel cell according to the embodiment of the invention. The fuel cell comprises an ion conductive portion 18 disposed between a negative electrode (fuel electrode or hydrogen electrode) 16 and a positive electrode (oxygen electrode) 17 facing each other. Further, a $H_2$ flow path 12 and a terminal 14 led out from the electrode 16, and a $O_2$ flow path 13 and a terminal 15 led out from the electrode 17 are disposed on the opposite sides of surfaces of the negative electrode 16 and the positive electrode 17 facing each other, respectively.

In this case, both of the negative electrode 16 and the positive electrode 17 are the above gas diffusion electrodes, however, at least the negative electrode 16 may be the gas diffusion electrode. Each of the electrodes 16 and 17, that is, the gas diffusion electrode according to the embodiment comprises a catalyst layer 10 and a porous gas permeable current collector 11 such as a carbon sheet, etc., and the catalyst layer 10 includes powder made through depositing the catalyst 3 (for example, platinum) on the surface of the electrically conductive ionic conductor 5 (for example, a material made of carbon powder having a sulfonic acid group chemically bonded thereto) and a mixture of a water repellent resin (for example, a fluorine-based) and a pore-forming agent (for example, $CaCO_3$). However, the catalyst layer 10 may include only powder made of the above electrically conductive ionic conductor 5 having the catalyst 3 deposited thereon, or may include any other ingredients such as a binder or an ion conductive material. Further, the gas permeable current collector 11 is not necessarily required.

Moreover, as the ion conductive portion 18, Nafion (DuPont's perfluorinated sulfonic acid resin) is typically used, but instead of Nafion, a fullerene derivative such as fullerenol (polyhydroxylated fullerene), etc. may be used.

The fullerene derivative has protonic ($H^+$) conductivity, therefore, the fullerene derivative can be included in the electrodes 16 and 17 in addition to the ion conductive portion 18.

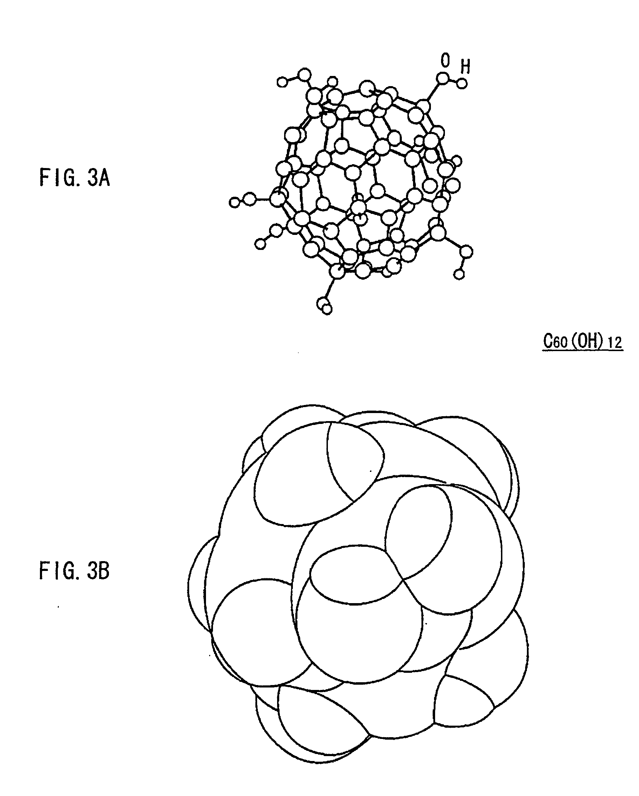

FIGs. 3A and 3B show the structures of fullerenol formed by introducing a plurality of hydroxyl groups (OH groups) into fullerene. In 1992, the first example of a complex of fullerenol was reported by Chiang et al. (Chiang, L. Y.; Swirczewski, J. W.; Hsu, C. S.; Chowdhury, S. K.; Cameron, S.; Creegan, K., J. Chem. Soc, Chem. Commun. 1992, 1791).

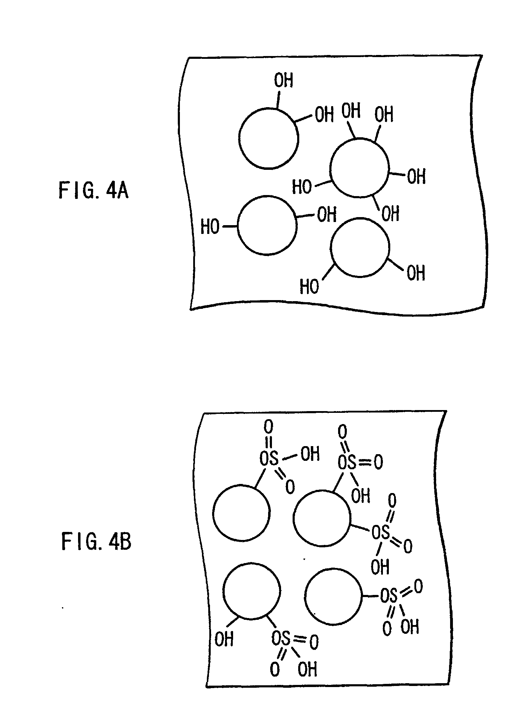

The inventor discovered for the first time that when fullerenol formed an agglomerate as schematically shown in FIG. 4A so as to generate interaction between hydraxyl groups of fullerenol (in the drawing, "o" indicates fullerene) adjacent to each other, the agglomerate exhibited higher protonic conductivity (in other words, dissociation of $H^+$ from a phenolic hydroxyl group) as a macro aggregate.

As a fullerene derivative which can develop the protonic conductivity in the same mechanism, there is a fullerene derivative into which $OSO_3H$ groups instead of the OH groups are introduced. Polyhydroxylated fullerene shown in FIG. 4B, that is, hydrogensulfate esterified fullerenol was also reported by Chiang et al. in 1994 (Chiang, L. Y.; Wang, L. Y.; Swirczewski, J. W.; Soled, S.; Cameron, S., J. Org. Chem. 1994, 59, 3960). There are hydrogensulfate esterified fullerenol including only the $OSO_3H$ groups in a molecule, and hydrogensulfate esterified fullerenol including the $OSO_3H$ groups and the OH groups in a molecule.

The material of the ion conductive portion 18 does not limited to fullerenol and hydrogensulfate esterified fullerenol, but any fullerene derivatives which can develop the protonic conductivity are applicable. Therefore, the groups introduced into fullerene are not specifically limited to the $OSO_3H$ groups and the OH groups, and, for example, -COOH, -$SO_3H$ and -$OPO(OH)_2$, etc. can be introduced.

In such a fullerene derivative, fullerene as a matrix can introduce a large number of functional groups such as the OH groups and the $OSO_3H$ groups into a molecule, so when a large number of fullerene derivatives are agglomerated, the hydrogen ion density per unit volume becomes extremely high so that effective conductivity can be developed.

Accordingly, when a large number of fullerene derivatives are agglomerated, protons derived from a large number of OH groups or $OSO_3H$ groups included in a molecule are directly involved so as to develop protonic conductivity which the agglomerated fullerene derivatives show as bulk, so it is not necessary to take in hydrogen or protons through absorbing water from outside, specifically outside air. Therefore, unlike a typical ion conductive material such as Nafion, there is no restriction on the outside atmosphere, so even under a dry atmosphere, the fullerene derivatives can be continuously used.

Moreover, as fullerene has electrophilicity, it is considered that in fullerene derivatives, the ionization of hydrogen ion in not only the $OSO_3H$ groups with high acidity but also the OH groups or the like is promoted so as to make the protonic conductivity higher.

These fullerene derivatives are mostly made of carbon atoms of fullerene, so they are lightweight and resistant to deterioration, and have no contaminant. The producing cost of fullerene has been steeply reduced. Consequently, it can be considered that fullerene is superior in material properties, as well as is an ideal electrolyte material in terms of resource, environment and economy.

An appropriate combination of well-known treatment such as acid treatment and hydrolysis is carried out on fullerene powder to introduce desired groups into carbon atoms of fullerene, thereby these fullerene derivatives are prepared. Then, the obtained fullerene derivatives are formed into a film shape through pressing, extrusion, or a well-known film forming method such as coating or vapor deposition, so that the ion conductive portion 18 can be formed. At this time, the ion conductive portion 18 may be virtually made of only fullerene derivatives or may include a binder. As the binder, one or more kinds of well-known polymers with film-forming property can be used, and the composition amount of the binder in the ion conductive portion 18 can be limited to 20% by weight or less in general. When the amount exceeds 20% by weight, the protonic conductivity may decline. When the fullerene derivatives are bound by the binder, the film-forming property derived from the binder is added, and a flexible ion conductive thin film (generally 300 µm thick or less) with a higher strength and a gas-permeation resistant function can be formed, compared with a powder compression molding of fullerene derivatives.

The above polymeric material is not specifically limited, and any materials having as little loss of protonic conductivity (due to the reaction with the fullerene derivatives) as possible and a film-forming property may be used. In general, a material having no electronic conductivity, and having good stability is used. Specific examples of the material are polytetrafluoroethylene, polyvinylidene fluoride, polyvinyl alcohol and so on, which are preferable polymeric materials because of the following reasons.

Firstly, polytetrafluoroethylene is preferable, because a thin film having a higher strength can be easily formed with a small composition amount thereof, compared with other polymeric materials. In this case, the composition amount is as small as 3% by weight or less, preferably 0.5% by weight to 1.5% by weight, so that the thickness of the thin film can be as thin as 100 μm to 1 μm in general.

Moreover, polyvinylidene fluoride and polyvinyl alcohol are preferable, because an ion conductive thin film having a better gas-permeation resistant function can be obtained. In this case, the composition amount is preferably within a range from 5% by weight to 15% by weight.

In any case of polyfluoroethylene, polyvinylidene fluoride or polyvinyl alcohol, when the composition amount is less than the lower limit of the above range, it may have adverse effects on forming a film.

Further, the above binders can be used as water repellent resins which can be included in the electrodes 16 and 17.

Incidentally, when the ion conductive portion 18 is made of Nafion, etc., ions conducted between the negative electrode 16 and the positive electrode 17 are $H_3O^+$ ions, and the electrode reactions in the negative electrode 16 and the positive electrode 17 are as follows.

$$Negative\ electrode\ 16:\ H_2 + 2H_2O \rightarrow 2H_3O^+ + 2e^-$$

$$Positive\ electrode\ 17:\ 2H_3O^+ + 1/2O_2 + 2e^- \rightarrow 3H_2O$$

On the other hand, when the ion conductive portion 18 is made of the fullerene derivatives, ions conducted between the electrodes are $H^+$ ions, and the electrode reactions are as follows.

$$Negative\ electrode\ 16:\ H_2 \rightarrow 2H^+ + 2e^-$$

$$Positive\ electrode\ 17:\ 2H^+ + 1/2O_2 + 2e^- \rightarrow H_2O$$

That is, in the fuel cell, in the case where hydrogen ($H_2$) or a hydrogen-contained gas is passed through the $H_2$ flow path 12, and oxygen (air) or an oxygen-contained gas is passed through the $O_2$ flow path 13, $H_3O^+$ ions or $H^+$ ions are generated in the negative electrode 16 during the time when $H_2$ is passed through the flow path 12, and the ions are conducted into the positive electrode 17 via the ion conductive portions 18 so as to react with oxygen (air) or the oxygen-contained gas passing through the $O_2$ flow path 13. Thus, a desired electromotive force can be obtained from between the terminals 14 and 15 of the electrodes 16 and 17, respectively.

In such a fuel cell, the electrodes 16 and 17 are gas diffusion electrodes according to the embodiment, so conduction of electrons and ions relate to the electrode reaction in the electrodes is smoothly progressed. Further, the electrodes 16 and 17 have electronic conductivity and ion conductivity, so it is not required to further dispose an ionic conductor on the surfaces thereof, and a contact area between the catalyst 3 and the gas is large, thereby, better catalytic activities can be obtained.

Next, as another specific example of the electrochemical device using the gas diffusion electrode according to the embodiment, a hydrogen peroxide producing apparatus is described below.

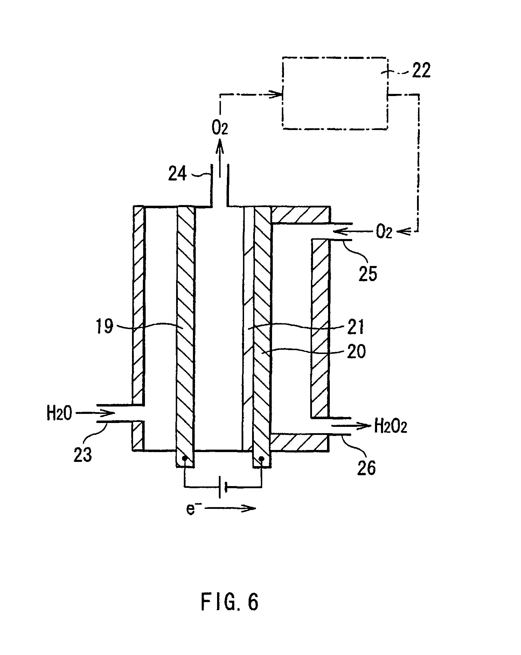

FIG. 6 shows a cross-sectional view of a hydrogen peroxide producing apparatus according to the embodiment. Hydrogen peroxide can be obtained through a non-electrolysis method, although an on-site method of producing hydrogen peroxide is more favorable for, for example, a bleaching process in a pulp factory.

The hydrogen peroxide producing apparatus comprises an anode 19 and a cathode 20 facing each other, and a protonic conductive portion 21 disposed therebetween. On the side of a surface of the anode 19 facing the cathode 20, a $O_2$ outlet 24 for discharging oxygen is disposed, and on the opposite side of the surface of the anode 19, a $H_2O$ inlet 23 for supplying water or a water-containing liquid (for example, a solution including sodium hydroxide as an electrolyte) is disposed. In addition, a sodium hydroxide solution as the water-containing liquid is generally used in a concentration of 0.5 mol/l to 1 mol/l.

On the side of a surface of the cathode 19 facing the anode 19, the protonic conductive portion 21 is disposed, and on the opposite side of the surface thereof, a $O_2$ inlet 25 for supplying oxygen or a oxygen-containing gas and a $H_2O_2$ takeout opening 26 for taking generated hydrogen peroxide out.

In this case, at least the cathode 20 of two electrodes 19 and 20 is the above gas diffusion electrode. When the anode 19 is not the gas diffusion electrode, it comprises, for example, platinum deposited on a porous carbon sheet.

Moreover, the protonic conductive portion 21 separates the both electrodes 19 and 20, as well as conducts protons ($H^+$) therebetween. For example, the protonic conductive portion 21 is made of the fullerene derivatives or the like described above as the material of the ion conductive portion 18.

When water and oxygen are supplied from the $H_2O$ inlet 23 to the anode 19 and from the $O_2$ inlet 25 to the side of the cathode 20, respectively, in the hydrogen peroxide producing apparatus, then a voltage is applied between the anode 19 and the cathode 20, the following electrode reactions occur.

$$Anode\ 19: 2H_2O(1) \rightarrow O_2(g) + 4H^+ + 4e^-$$

$$Cathode\ 20: O_2(g) + 2H^+ + 2e^- \rightarrow H_2O_2$$

In addition, a theoretical voltage required for the reactions is 1.229-0.695=0.534 V at 25°C.

On other words, water supplied from the $H_2O$ inlet 23 is decomposed in the anode 19 to produce hydrogen ions ($H^+$), and the hydrogen ions are conducted to the cathode 20 via the protonic conductive portion 21. Oxygen produced at the same time when the hydrogen ions are produced is discharged from the $O_2$ outlet 24. In the cathode 19, the conducted hydrogen ions and oxygen supplied from the $O_2$ inlet 25 react to produce hydrogen peroxide ($H_2O_2$).

In the hydrogen peroxide producing apparatus, at least the cathode 20 is the gas diffusion electrode, so at least in the cathode 20, the hydrogen ions and electrons which are required to produce hydrogen peroxide can smoothly move.

Further, oxygen generated in the anode 19 is discharged from the $O_2$ outlet. However, for example, the oxygen may be stored in an oxygen-collecting portion 22, and when required, the oxygen can be supplied from the $O_2$ inlet 25 to the cathode 20.

The electrochemical device according to the invention may be configured as a hydrogen producing apparatus in addition to the above fuel cell or hydrogen peroxide producing apparatus, and as the electrodes thereof, the gas diffusion electrodes according to the invention can be used. In this case, for example, water or water-containing liquid is introduced into the side of an electrode, and a voltage of approximately 5 V is applied between the electrodes, so that hydrogen can be produced on the side of the other electrode. Further, the electrochemical device may be configured as a salt-water electrolytic apparatus, and as the electrodes thereof, the gas diffusion electrodes according to the invention can be used.

The present invention is described below in more detail referring to examples.

In the electrically conductive ionic conductor and the gas diffusion electrode according to the invention, a method of bonding an ion conductive group to electrically conductive powder is carried out not through deposition, etc. but through chemical treatment. An example of the method of bonding the ion conductive group to the electrically conductive powder in the case where carbon powder (for example, acetylene black) as the electrically conductive powder and a hydroxyl group as the ion conductive group are used is described below.

After 2 g of carbon powder with a particle diameter of 10 nm was added in 30 ml of fuming sulfuric acid, the fuming sulfuric acid with the carbon power contained therein was stirred for three days at 57°C under a nitrogen atmosphere. An obtained reactant was gradually put into anhydrous diethyl ether cooled in an ice bath. An obtained deposit was separated through centrifugal separation, then after the deposit was cleaned with diethyl ether three times and with a mixed solution of diethyl ether and acetonitrile in a 2:1 ratio twice, the deposit was dried at 40°C under a reduced pressure. A dried body was put into 60 ml of ion-exchange water, and stirred at 85°C for 10 hours by bubbling with nitrogen A reaction product was separated from a deposit through centrifugal separation. After cleaning with pure water several times and carrying out centrifugal separation again, the reaction product was dried under a reduced pressure at 40°C. Thus, the hydroxyl group was bonded to the carbon powder through the chemical treatment to obtain carbon hydroxide as the electrically conductive ionic conductor according to the invention.

Next, an example of a method of bonding a sulfonic acid group to the carbon powder (for example, acetylene black) is described below.

After 1 g of carbon hydroxide powder made of the hydroxyl group bonded to carbon powder by chemical treatment through the above method was put into 60 ml of fuming sulfuric acid, the fuming sulfuric acid with carbon powder contained therein was stirred at room temperature under a nitrogen atmosphere for three days. An obtained reactant was gradually put into anhydrous diethyl ether cooled in an ice bath. An obtained deposit was separated through centrifugal separation. After the deposit was cleaned with diethyl ether three times, and with a mixed solution of diethyl ether and acetonitrile in a 2:1 ratio twice, the deposit was dried at 40°C under a reduced pressure. Thus, a hydrogen sulfate ester group was applied to the electrically conductive carbon powder to obtain hydrogensulfate esterified carbon as the electrically conductive ionic conductor according to the invention.

In this case, the example that the carbon powder is used as the electrically conductive powder is described, although any other ion conductive group such as a hydroxyl group and a sulfonic acid group can be bonded to any other electrically conductive powder such as ITO and tin oxide through the same method.

Moreover, in Japanese Unexamined Patent Application Publication No. Hei 8-249923, Japanese Unexamined Patent Application Publication No. Hei 11-203936, Japanese Unexamined Patent Application Publication No. Hei 10-69817 and so on, methods of introducing a proton dissociation group into silicon oxide (insulating material) are disclosed. By the use of these well-known methods, the proton dissociation group can be bonded to the above electrically conductive powder.

In the electrically conductive ionic conductor comprising the electrically conductive powder having the hydroxyl group or the hydrogen sulfate ester group chemically bonded thereto, the electrically conductive powder exhibits electronic conductivity, so the ion conductivity cannot be measured. However, as the sulfonic acid group, etc. is deposited through the same method described in Japanese Patent Application No. 11-204038, etc., the ion conductivity can be secured.

Comparative Example 1

After fullerenol as an ionic conductor was deposited on carbon powder (with the average particle diameter of 0.1 µm), in order to support platinum on the fullerenol-containing carbon powder, liquid-phase deposition was carried out. That is, the fullerenol-containing carbon powder was immersed in a hexamine platinum (IV) chloride ($[Pt(IV)(NH_3)_6]Cl_4$) solution containing 10 g/l of platinum at room temperature for one hour to carry out ion exchange. Next, after cleaning the ion-exchanged carbon powder, the carbon powder was reduced in a hydrogen flow at 180°C to obtain platinum supported powder. The powder was coated on a carbon sheet so as to have a thickness of 10 µm. The carbon sheet with the powder coated thereon was the electrode of Comparative Example 1. By the use of the electrode of Comparative Example 1, the fuel cell shown in FIG. 5 was made, and the output thereof was measured. The output (in mW/cm$^2$) obtained in Comparative Example 1 was 100 as a relative value, which was considered as a reference value.

Example 1

In order to support platinum on the hydrogensulfate esterified carbon powder obtained through the above method, liquid-phase deposition was used. That is, the carbon powder to which a sulfonic acid group was chemically bonded was immersed in a hexamine platinum (IV) chloride ($[Pt(IV)(NH_3)_6]Cl_4$) solution containing 10 g/l of platinum at room temperature for one hour to carry out ion-exchange. Next, after cleaning the ion-changed carbon powder, the carbon powder was reduced in a hydrogen flow at 180°C to obtain platinum supported powder. The powder was coated on a carbon sheet so as to have a thickness of 10 µm. The carbon sheet with the powder coated thereon was the gas diffusion electrode of Example 1. By the use of the gas diffusion electrode, the fuel cell shown in FIG. 5 was made, and the output thereof was measured. The output of 200% above that of Comparative Example 1 was obtained.

Exampe 2

By the use of the apparatus shown in FIG. 2, under the condition that no vibration was applied, through the sputtering method (Ar pressure: 1 Pa, RF: 200 W), platinum was deposited on a surface of hydrogensulfate esterified carbon powder obtained through the above-described method. At that time, the amount of platinum was adjusted so as to be 50% by weight of the hydrogensulfate esterified carbon powder. Next, the hydrogensulfate esterified carbon powder on which platinum was deposited was mixed with a water repellent resin (fluorine-based) and a pore-producing agent ($CaCO_3$). After the mixed material was coated on a carbon sheet so as to have a thickness of 10 µm, $CaCO_3$ as the pore-producing agent was removed through acid treatment to produce pores. The carbon sheet with the mixed material coated thereon was the gas diffusion electrode of Example 2. By the use of the gas diffusion electrode, the fuel cell shown in FIG. 5 was made, and the output was measured. The output of 400% above that of Comparative Example 1 was obtained.

Example 3

By the use of the apparatus shown in FIG. 2, under the condition that vibrations were applied by an ultrasonic transducer, through the sputtering method (Ar pressure: 1 Pa, RF: 200 W), platinum was deposited on a surface of hydrogensulfate esterified carbon powder obtained through the above-described method. At that time, the amount of platinum was adjusted so as to be 50% by weight of the hydrogensulfate esterified carbon powder. Next, the hydrogensulfate esterified carbon powder on which platinum was deposited was mixed with a water repellent resin (fluorine-based) and a pore-producing agent ($CaCO_3$). After the mixed material was coated on a carbon sheet so as to have a thickness of 10 µm, $CaCO_3$ as the pore-producing agent was removed through acid treatment to produce pores. The carbon sheet with the mixed material coated thereon was the gas diffusion electrode of Example 3. By the use of the gas diffusion electrode, the fuel cell shown in FIG. 5 was made, and the output was measured. The output of 600% above that of Comparative Example 1 was obtained.

It became evident from the above that the electrically conductive ionic conductor and the gas diffusion electrode according to the invention comprised electrically conductive powder such as carbon powder having the ion conductive group such as the sulfonic acid group bonded thereto through the chemical treatment, so the electrically conductive ionic conductor and the gas diffusion electrode had electronic conductivity and ion conductivity, and accordingly, electrons or hydrogen ions were smoothly conducted, and thereby, in the fuel cell made by the use of the gas diffusion electrode, a higher output could be obtained.

Moreover, it was evident from the comparison among Examples 1, 2 and 3 that in the electrically conductive ionic conductor in Example 1 on which the catalyst was deposited through the liquid-phase deposition, the ion conductive group might deteriorate depending upon the treatment condition (heat treatment) when platinum was deposited, so the output thereof declined in some degree, compared with those of Examples 2 and 3. On the other hand, in the case of Examples 2 and 3 on which the catalyst was supported through the physical vapor deposition such as the sputtering method, no heat treatment was required, so the catalyst could be deposited without impairing the performance of the ion conductive group. Further, the crystallinity of platinum as the catalyst was higher, so the fuel cell made by the use of the gas diffusion electrode could obtain a further higher output.

Moreover, it was evident from the comparison between Examples 2 and 3 that when the catalyst (platinum) was deposited on the surface of the hydrogensulfate esterified carbon powder obtained through the above-described method, a sufficient amount of catalyst could be deposited more evenly under the condition that vibrations were applied to the hydrogensulfate esterified carbon powder than under the condition that no vibration was applied, thereby a further higher output could be obtained.

Example 4

In the hydrogen peroxide producing apparatus shown in FIG. 6, as the cathode 20, the gas diffusion electrode made of the hydrogensulfate esterified carbon powder obtained through the above described method was used, and as the anode 19, a platinum board obtained through depositing platinum on a carbon sheet was used. Then, by the use of 1 mol/cm$^2$ of a sodium hydroxide solution, electrolysis was carried out at the current density of 20 mA/cm$^2$ to produce hydrogen peroxide. Thus, hydrogen peroxide corresponding to 65% of current efficiency could be produced.

Example 5

Perfluorinated sulfonic acid as the above ionic conductor was deposited on carbon. That is, in a alcohol solution of perfluorinated sulfonic acid, carbon powder was dispersed, and the solution containing carbon powder was coated and dried on Teflon to form a carbon coating film by the use of the perfluorinated sulfonic acid as a binder. After the coating film was removed from Teflon, the film was pulverized to produce fine powder of perfluorinated sulfonic acid deposited on carbon.

By the use of the apparatus shown in FIG. 2, under the condition that vibrations were applied, through the sputtering method (Ar pressure: 1 Pa, RF: 200 W), platinum was deposited on a surface of carbon powder on which perfluorinated sulfonic acid was deposited. At that time, the amount of platinum was adjusted so as to be 50% by weight of the carbon powder. Thus, the carbon powder on which perfluorinated sulfonic acid and platinum were deposited was mixed and kneaded with a water repellent resin (fluorine-based) and a pore-producing agent (CaCO$_3$). After the mixed material was coated on a carbon sheet so as to have a thickness of 10 μm, CaCO$_3$ as the pore-producing agent was removed through acid treatment to produce pores. The carbon sheet with the mixed material coated thereon was the gas diffusion electrode of Example 5. By the use of the gas diffusion electrode, the fuel cell shown in FIG. 5 was made, and the output was measured. The output of 800% above that of Comparative Example 1 was obtained.

Thus, as the electrically conductive ionic conductor and the gas diffusion electrode according to the invention have electronic conductivity and ion conductive, unlike the conventional methods, it is not required that the catalyst is supported on the electrically conductive powder, and then the ionic conductor is deposited thereon. Therefore, when the catalyst is added to form the electrode, the catalyst is disposed on the surface of the electrically conductive ionic conductor, so that the problem that the contact surface with gas is reduced because the catalyst is blocked by the ionic conductor can be prevented, and thereby the specific surface area of the catalyst can become larger, and the catalytic activities can be improved. Further, in the electrically conductive ionic conductor and the gas diffusion electrode according to the invention, ions such as electrons or protons (H$^+$) therein can be smoothly conducted.

Moreover, in the gas diffusion electrode, the electrically conductive ionic conductor and a method of producing the same according to the invention, the ion conductive group is not deposited on the electrically conductive powder, but the ion conductive group is chemically bonded to the electrically conductive powder to produce the gas diffusion electrode and the electrically conductive ionic conductor, so the ion conductive group is not easily dissociated, and the chemical properties can be stably maintained.

The electrochemical device according to the invention comprises the positive electrode, the negative electrode and the ionic conductor disposed therebetween, and at least one of the positive electrode and the negative electrode is configured as the gas diffusion electrode of the invention. Therefore, the electrode reaction can effectively proceed, and better output properties can be obtained.

Obviously many modifications and variations of the present invention are possible in the light of the above teachings. It is therefore to be understood that within the scope of the appended claims the invention may be practiced otherwise than as specifically described.

**Claims**

1. A gas diffusion electrode comprising:

   an electrically conductive ionic conductor including electrically conductive powder having an ion conductive group bonded thereto; or electrically conductive powder having an ion conductor deposited thereon.

2. A gas diffusion electrode according to claim 1, wherein
   a catalyst is deposited on a surface of the electrically conductive ionic conductor.

3. A gas diffusion electrode according to claim 1, wherein

the electrically conductive powder is made of at least one kind selected from the group consisting of carbon, ITO (indium tin oxide: a conductive oxide which is indium oxide doped with tin) and tin oxide.

4. A gas diffusion electrode according to claim 1, wherein
the bonding amount of the ion conductive group is within a range from 0.001 mol to 0.3 mol per mol of a material forming the electrically conductive powder.

5. A gas diffusion electrode according to claim 4, wherein
the electrically conductive powder is made of a graphite-based carbon material, and the bonding amount of the ion conductive group is within a range from 0.001 mol to 0.1 mol per mol of carbon atoms forming the graphite-based carbon material.

6. A gas diffusion electrode according to claim 4, wherein
the electrically conductive powder is made of ITO or tin oxide, and the bonding amount of the ion conductive group is within a range from 0.001 mol to 0.3 mol per mol of the electrically conductive powder.

7. A gas diffusion electrode according to claim 1, wherein
the ion conductive group is a proton dissociation group.

8. A gas diffusion electrode according to claim 7, wherein
the ion conductive group is any one selected from the group consisting of -OH, $-OSO_3H$, -COOH, $-SO_3H$ and $-OPO(OH)_2$.

9. A gas diffusion electrode according to claim 1, wherein
the particle diameter of the electrically conductive powder is within a range from 1 nm to 10 nm.

10. A gas diffusion electrode according to claim 1, wherein
the electrical resistance of the electrically conductive powder is $10^{-3} \Omega \cdot m$ or less.

11. A gas diffusion electrode according to claim 1, wherein
the electrically conductive powder is made of carbon having an oil absorption of 200 ml/100 g or over, or a specific surface area of 300 $m^2$/g or over.

12. A gas diffusion electrode according to claim 2, wherein
the catalyst is deposited through physical vapor deposition.

13. A gas diffusion electrode according to claim 12, wherein
the physical vapor deposition is a sputtering method.

14. A gas diffusion electrode according to claim 12, wherein
the physical vapor deposition is a pulse laser deposition method.

15. A gas diffusion electrode according to claim 12, wherein
the physical vapor deposition is a vacuum evaporation method.

16. A gas diffusion electrode according to claim 2, wherein
the amount of the catalyst deposited is 10% by weight to 1000% by weight of the electrically conductive ionic conductor.

17. A gas diffusion electrode according to claim 2, wherein
the catalyst is metal having electronic conductivity.

18. An electrically conductive ionic conductor comprising:

electrically conductive powder having an ion conductive group bonded thereto: or electrically conductive powder having an ionic conductor deposited thereon.

19. An electrically conductive ionic conductor according to claim 18, wherein
the electrically conductive powder is made of at least one kind selected from the group consisting of carbon, ITO (indium tin oxide: a conductive oxide which is indium oxide doped with tin) and tin oxide.

20. An electrically conductive ionic conductor according to claim 18, wherein
the bonding amount of the ion conductive group is within a range from 0.001 mol to 0.3 mol per mol of a material forming the electrically conductive powder.

21. An electrically conductive ionic conductor according to claim 20, wherein
the electrically conductive powder is made of a graphite-based carbon material, and the bonding amount of the ion conductive group is within a range from 0.001 mol to 0.1 mol per mol of carbon atoms forming the graphite-based carbon material.

**22.** An electrically conductive ionic conductor according to claim 20, wherein
the electrically conductive powder is made of ITO or tin oxide, and the bonding amount of the ion conductive group is within a range from 0.001 mol to 0.3 mol per mol of the electrically conductive powder.

**23.** An electrically conductive ionic conductor according to claim 18, wherein
the ion conductive group is a proton dissociation group.

**24.** An electrically conductive ionic conductor according to claim 23, wherein
the ion conductive group is any one selected from the group consisting of -OH, -OSO$_3$H, -COOH, -SO$_3$H and -OPO(OH)$_2$.

**25.** An electrically conductive ionic conductor according to claim 18, wherein
the particle diameter of the electrically conductive powder is within a range from 1 nm to 10 nm.

**26.** An electrically conductive ionic conductor according to claim 18, wherein
the electrical resistance of the electrically conductive powder is 10$^{-3}$Ω·m or less.

**27.** An electrically conductive ionic conductor according to claim 18, wherein
the electrically conductive powder is made of carbon having an oil absorption of 200 ml/100 g or over, or a specific surface area of 300 m$^2$/g or over.

**28.** A method of producing an electrically conductive ionic conductor, comprising the step of:

bonding an ion conductive group to electrically conductive powder by chemical treatment; or depositing an ionic conductor on electrically conductive powder.

**29.** A method of producing an electrically conductive ionic conductor according to claim 28, wherein
at least one kind selected from the group consisting of carbon, ITO (indium tin oxide: a conductive oxide which is indium oxide doped with tin) and tin oxide is used as the electrically conductive powder.

**30.** A method of producing an electrically conductive ionic conductor according to claim 28, wherein
the ion conductive group is bonded at a rate of 0.001 mol to 0.3 mol per mol of a material forming the electrically conductive powder.

**31.** A method of producing an electrically conductive ionic conductor according to claim 30, wherein
the electrically conductive powder is made of a graphite-based carbon material, and the ion conductive group is bonded at a rate of 0.001 mol to 0.1 mol per mol of carbon atoms forming the graphite-based carbon material.

**32.** A method of producing an electrically conductive ionic conductor according to claim 30, wherein
the electrically conductive powder is made of ITO or tin oxide, and the ion conductive group is bonded at a rate of 0.001 mol to 0.3 mol per mol of the electrically conductive powder.

**33.** A method of producing an electrically conductive ionic conductor according to claim 28, wherein
the ion conductive group is a proton dissociation group.

**34.** A method of producing an electrically conductive ionic conductor according to claim 33, wherein
any one selected from the group consisting of -OH, -OSO$_3$H, -COOH, - SO$_3$H and -OPO(OH)$_2$ is used as the ion conductive group.

**35.** A method of producing an electrically conductive ionic conductor according to claim 28, wherein
powder having a particle diameter ranging from 1 nm to 10 nm is used as the electrically conductive powder.

**36.** A method of producing an electrically conductive ionic conductor according to claim 28, wherein
powder having an electrical resistance of 10$^{-3}$Ω·m or less is used as the electrically conductive powder.

**37.** A method of producing an electrically conductive ionic conductor according to claim 28, wherein
carbon having an oil absorption of 200 ml/100 g or over, or a specific surface area of 300 m$^2$/g or over is used as the electrically conductive powder.

**38.** A method of producing a gas diffusion electrode, comprising the step of:

containing at least a catalyst in an electrically conductive ionic conductor,

wherein the electrically conductive ionic conductor is produced through bonding an ion conductive group to electrically conductive powder by chemical treatment or through depositing an ionic conductor on electrically conductive powder.

**39.** A method of producing a gas diffusion electrode according to claim 38, wherein
a catalyst is deposited on a surface of the electrically conductive ionic conductor.

**40.** A method of producing a gas diffusion electrode according to claim 39, wherein
the catalyst is deposited through physical vapor deposition.

**41.** A method of producing a gas diffusion electrode according to claim 40, wherein
a sputtering method is used as the physical vapor deposition.

**42.** A method of producing a gas diffusion electrode according to claim 40, wherein
a pulse laser deposition method is used as the physical vapor deposition.

**43.** A method of producing a gas diffusion electrode according to claim 40, wherein
a vacuum evaporation method is used as the physical vapor deposition.

**44.** A method of producing a gas diffusion electrode according to claim 39, wherein
the catalyst is deposited at a rate of 10% by weight to 1000% by weight of the electrically conductive ionic conductor.

**45.** A method of producing a gas diffusion electrode according to claim 39, wherein
metal having electronic conductivity is used as the catalyst.

**46.** A method of producing a gas diffusion electrode according to claim 39, wherein
the catalyst is deposited while vibrations are applied to the electrically conductive ionic conductor.

**47.** A method of producing a gas diffusion electrode according to claim 46, wherein
sonic waves are applied to generate the vibrations.

**48.** An electrochemical device comprising a positive electrode, a negative electrode, and an ionic conductor disposed between the positive electrode and the negative electrode,
wherein at least one of the positive electrode and the negative electrode is a gas diffusion electrode including an electrically conductive ionic conductor, and the electrically conductive ionic conductor is produced through bonding an ion conductive group to electrically conductive powder, or depositing an ionic conductor on electrically conductive powder.

**49.** An electrochemical device according to claim 48, wherein
a catalyst is deposited on a surface of the electrically conductive ionic conductor.

**50.** An electrochemical device according to claim 48, wherein
the electrically conductive powder is made of at least one kind selected from the group consisting of carbon, ITO and tin oxide.

**51.** An electrochemical device according to claim 48, wherein
the bonding amount of the ion conductive group is within a range from 0.001 mol to 0.3 mol per mol of a material forming the electrically conductive powder.

**52.** An electrochemical device according to claim 51, wherein
the electrically conductive powder is a graphite-based carbon material, and the bonding amount of the ion conductive group is within a range from 0.001 mol to 0.1 mol per mol of carbon atoms forming the graphite-based carbon material.

**53.** An electrochemical device according to claim 51, wherein
the electrically conductive powder is made of ITO or tin oxide, and the bonding amount of the ion conductive group is within a range from 0.001 mol to 0.3 mol per mol of the electrically conductive powder.

**54.** An electrochemical device according to claim 48, wherein
the ion conductive group is a proton dissociation group.

**55.** An electrochemical device according to claim 54, wherein
the ion conductive group is any one selected from the group consisting of -OH, $-OSO_3H$, -COOH, $-SO_3H$ and $-OPO(OH)_2$.

**56.** An electrochemical device according to claim 48, wherein
the particle diameter of the electrically conductive powder is within a range from 1 nm to 10 nm.

**57.** An electrochemical device according to claim 48, wherein
the electrical resistance of the electrically conductive powder is 10 $3\Omega \cdot m$ or less.

**58.** An electrochemical device according to claim 49, wherein
the catalyst is deposited through physical vapor deposition.

**59.** An electrochemical device according to claim 58, wherein

the physical vapor deposition is a sputtering method.

**60.** An electrochemical device according to claim 58, wherein

the physical vapor deposition is a pulse laser deposition method.

**61.** An electrochemical device according to claim 58, wherein

the physical vapor deposition is a vacuum evaporation method.

**62.** An electrochemical device according to claim 49, wherein

the amount of the catalyst deposited is within a range from 10% by weight to 1000% by weight of the electrically conductive ionic conductor.

**63.** An electrochemical device according to claim 49, wherein

the catalyst is metal having electronic conductivity.

**64.** An electrochemical device according to claim 48, wherein

the electrochemical device is configured as a fuel cell.

**65.** An electrochemical device according to claim 48, wherein the electrochemical device is configured as a hydrogen peroxide producing apparatus.

FIG. 1A

FIG. 1B

FIG. 1C

FIG. 2

FIG. 3A

$C_{60}(OH)_{12}$

FIG. 3B

FIG. 4A

FIG. 4B

FIG. 5

EP 1 347 525 A1

FIG. 6

<table>
<tr><td colspan="2" align="center"><strong>INTERNATIONAL SEARCH REPORT</strong></td><td>International application No.<br><br>PCT/JP01/11601</td></tr>
</table>

| A. | CLASSIFICATION OF SUBJECT MATTER |
|---|---|
| | Int.Cl<sup>7</sup> H01M4/86, H01M4/88, H01M8/02, C25B11/03, C25B11/30 |

According to International Patent Classification (IPC) or to both national classification and IPC

| B. | FIELDS SEARCHED |
|---|---|

Minimum documentation searched (classification system followed by classification symbols)
Int.Cl$^7$ H01M4/86, H01M4/88, H01M8/02, C25B11/03, C25B11/30

Documentation searched other than minimum documentation to the extent that such documents are included in the fields searched

| Jitsuyo Shinan Koho | 1926–1996 | Toroku Jitsuyo Shinan Koho | 1994–2002 |
|---|---|---|---|
| Kokai Jitsuyo Shinan Koho | 1971–2002 | Jitsuyo Shinan Toroku Koho | 1996–2002 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP, 7-134995, A (Toyota Central Research And Development Labo, Toyota Motor Corp.), 23 May, 1995 (23.05.95), Claims; Par. Nos. [0013] to [0018] (Family: none) | 1 |
| X | JP, 2000-228204, A (Matsushita Electric Industrial Co., Ltd.), 15 August, 2000 (15.08.00), Claims; Par. Nos. [0024] to [0046]; Figs. 1 to 4 & WO 99/66578 A1 | 1 |
| X | JP, 6-103984, A (Tanaka Kikinzoku Kogyo K.K. Stonehart Associates Inc.), 15 April, 1994 (15.04.94), Claims; Par. Nos. [0006] to [0008] & US 5453332 A | 1 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 April, 2002 (01.04.02) | Date of mailing of the international search report<br>09 April, 2002 (09-04.02) |
|---|---|
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP01/11601 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP, 7-183035, A  (Matsushita Electric Industrial Co., Ltd.), 21 July, 1995 (21.07.95); Par. Nos. [0016] to [0026]; Figs. 1 to 3   (Family: none) | 1 |
| X | JP, 10-270055, A  (Mitsubishi Electric Corp.), 09 October, 1998 (09.10.98), Claims; Par. Nos. [0027] to [0082]; Figs. 1 to 13 (Family: none) | 1 |
| X | JP, 10-270056, A  (Mitsubishi Electric Corp.), 09 October, 1998 (09.10.98), Claims; Par. Nos. [0026] to [0037]; Fig. 3 (Family: none) | 1 |

Form PCT/ISA/210 (continuation of second sheet) (July 1998)

<div style="text-align:center">

## INTERNATIONAL SEARCH REPORT

</div>

| International application No. |
| --- |
| PCT/JP01/11601 |

| **Box I   Observations where certain claims were found unsearchable (Continuation of item 1 of first sheet)** |
| --- |

This international search report has not been established in respect of certain claims under Article 17(2)(a) for the following reasons:

1. ☐ Claims Nos.:

    because they relate to subject matter not required to be searched by this Authority, namely:

2. ☐ Claims Nos.:

    because they relate to parts of the international application that do not comply with the prescribed requirements to such an extent that no meaningful international search can be carried out, specifically:

3. ☐ Claims Nos.:

    because they are dependent claims and are not drafted in accordance with the second and third sentences of Rule 6.4(a).

| **Box II   Observations where unity of invention is lacking (Continuation of item 2 of first sheet)** |
| --- |

This International Searching Authority found multiple inventions in this international application, as follows:
  (See extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:  1

**Remark on Protest**  ☐  The additional search fees were accompanied by the applicant's protest.

                      ☐  No protest accompanied the payment of additional search fees.

Form PCT/ISA/210 (continuation of first sheet (1)) (July 1998)

**INTERNATIONAL SEARCH REPORT**

| International application No. |
| --- |
| PCT/JP01/11601 |

Continuation of Box No.Ⅱ of Continuation of first sheet (1)

In order that a group of inventions of a claims may satisfy the requirement of unity of invention, there must exist a special technical feature so linking the group of inventions as to form a single general inventive concept. As described in the extra sheets, the claims of this international application are divided into 34 divisions: 1; 2; 3; 4-6, 20-22, 30-32, 51-53; 7; 8; 9, 25, 35, 56; 10, 26, 36, 57; 11, 27, 37; 12-15, 40-43, 58-61; 16; 17; 18; 19; 23; 24; 28; 29; 33; 34; 38; 39; 44; 45; 46-47; 48; 49; 50; 54; 55; 62; 63; 64; 65. The number of inventions is increased by the divisions 4-6, 20-22, 30-32, 51-53; 7; 8; 23; 24; 33; 34; 54; 55 one by one and by the other divisions two by two, so that 59 inventions are defined by claims 1-65 of this international application.

In order that a group of inventions of the claims satisfies the requirement of unity of invention, there must exist a special technical feature so linking the group of inventions as to form a single general inventive concept. The group of inventions of claims 1-65 are linked only in the subject matter "an electroconductive ion conductor produced by bonding an ion conductive group to an electroconductive powder or by depositing an ion conductor on an electroconductive powder."

It is clear that this subject matter itself involves two different technical features "an electroconductive ion conductor formed by bonding an ion conductive group to an electroconductive powder" and "an electroconductive ion conductor formed by depositing an ion conductor on an electroconductive powder". Thus, there exists no special technical feature among the group of inventions of claims 1-65 which so links them as to form a single general inventive concept.

Therefore, the group of inventions of claims 1-65 do not satisfy the requirement of unity of invention.

The number of groups of inventions, i.e., the number of inventions so linked as to form a general inventive concept of the claims of this international application will be examined.

Considering the specific forms of the inventions of independent claims, the claims of this international application define the inventions divided divisions: 1-17, 18-27, 28-37, 38-47, 48-65. These inventions are, as mentioned above, linked only in the subject matter "an electroconductive ion conductor produced by bonding an ion conductive group to an electroconductive powder or by depositing an ion conductor on an electroconductive powder".

The subject matter "an electroconductive ion conductor produced by bonding an ion conductive group to an electroconductive powder" is described in prior art documents such as JP 7-134995 A (Toyota Central R&D Labs, Inc. & Toyota Motor Corp.) 1995. 05. 23 or JP 2000-228204 A(Matsushita Electric Industry Co. Ltd.) 2000. 08. 15. and therefore cannot be a special technical feature. The subject matter "an electroconductive ion conductor produced by depositing an ion conductor on an electroconductive powder" is described in prior art documents such as JP 6-103984 A (Tanaka Kikinzoku Kogyo K.K. & Stonehayt Associates Inc.) 1994. 04. 15, JP 7 183035 A (Matsushita Electric Industry Co. Ltd.), JP 10-270055 A (Mitsubishi Electric Corp.) 1998. 10. 09. or JP 10-270056 A (Mitsubishi Electric Corp.)1998. 10. 09, and therefore cannot be a special technical feature. Thus, there exists no special technical feature which links the inventions of claims divided into divisions: 1-17, 18-27, 28-37, 38-47, 48-65.

Since the above mentioned subject matter is the invention itself of claim 18 but not a special technical feature, there exists no special technical feature so linking as to form a general inventive concept among the invention of claim 18 and those of claims 19, 20, 23, 25, 26, 27 described by citing the description of Claim 18.

## INTERNATIONAL SEARCH REPORT

International application No.

PCT/JP01/11601

Claim 1 defines a gas diffusive electrode comprising an electroconductive ion conductor that is the invention itself of claim 18. Such a gas diffusive electrode is described in prior art documents such as JP 7-134995 A (Toyota Central R&D Labs, Inc. & Toyota Motor Corp.) 1995. 05. 23, JP 2000-228204 A (Matsushita Electric Industry Co. Ltd.) 2000. 08. 15. JP 6-103984 A (Tanaka Kikinzoku Kogyo K.K. & Stonehart Associates Inc.) 1994. 04. 15, JP 7—183035 A(Matsushita Electric Industry Co. Ltd.), JP 10-270055 A(Mitsubishi Electric Corp.) 1998. 10. 09, and JP 10-270056 A(Mitsubishi Electric Corp.) 1998. 10. 09, and therefore cannot be a special technical feature. Thus, there exists no special technical feature so linking as to form a general inventive concept among the invention of claim 1 and those of claims 2-4, 7, 9, 10, 11 described by citing the description of claim 1. Further, a gas diffusive electrode of claim 2 is described in prior art document such as JP 7-134995 A (Toyota Central Research Institute & Toyota Motor Corp.) 1995. 05. 23. and JP 10-270055 A (Mitsubishi Electric Corp.) 1998. 10. 09, JP 10-270056 A (Mitsubishi Electric Corp.) 1998.10.09, and therefore cannot be a special technical feature. Thus, there exists no special technical feature so linking as to form a general inventive concept among the invention of claim 2 and those of claims 12, 16, 17 described by citing the description of claim 2. A gas diffusive electrode of claim 7 is described in prior art documents such as JP 7-134995 A (Toyota Central R&D Labs, Inc. & Toyota Motor Corp.) 1995. 05. 23, and therefore cannot be a special technical feature. Thus, there exists no special technical feature so linking as to form a general inventive concept between the invention of claim 7 and that of claim 8 described by citing the description of claim 7.

Claim 28 defines the invention of a method for manufacturing an electroconductive ion conductor that is the invention of claim 18. Claim 38 defines the invention of a method for manufacturing a gas diffusive electrode produced by adding a catalyst to an electroconductive ion conductor manufactured by the invention of claim 28 claim 48 defines the invention of an electrochemical device comprising positive and negative electrodes and an ion conductor provided between the positive and negative electrodes, wherein at least one of the positive and negative electrodes is a gas diffusive electrode that is the invention of claim 1. These inventions are all described in prior art documents such as JP 7-134995 A (Toyota Central R&D Labs, Inc. & Toyota Motor Corp.) 1995. 05. 23, JP 2000-228204 A (Matsushita Electric Machine Co.) 2000. 08. 15, JP 6-103984 A (Tanaka Kikinzoku Kogyo K.K. & Stonehart Associates Inc.) 1994. 04. 15, JP 7—183035 A (Matsushita Electric Industry Co. Ltd.), JP 10-270055 A (Mitsubishi Electric Corp.) 1998. 10. 09, and JP 10-270056 A (Mitsubishi Electric Corp.) 1998. 10. 09. and therefore cannot be a special technical feature. Thus, there exists no special technical feature so linking as to form a general inventive concept among the invention of claim 28 and claims 29, 30, 33, 35-37 described by citing the description of claim 28. There exists no special technical feature so linking as to form a general inventive concept between the inventions of claim 38 and claim 39 described by citing the description of claim 38. There exists no special technical feature so linking as to form a general inventive concept among the invention of claim 48 and those of claims 49, 50, 51, 54, 56, 57, 64, 65 described by citing the description of claim 48. Further, a method for manufacturing an electroconductive ion conductor of claim 33 is described in prior art documents such as JP 7-134995 A (Toyota Central R&D Labs, Inc. & Toyota Motor Corp.) 1995. 05. 23, and therefore cannot be a special technical feature.

Thus, there exists no special technical feature so linking as to form a general inventive concept between the invention of claim 33 and that of claim 34 described by citing the description of claim 34. A method for manufacturing a gas diffusive electrode of claims 38, 39 is described in prior art documents such as JP 7-134995 A (Toyota Central R&D Labs, Inc. & Toyota Motor Corp.) 1995. 05. 23, JP 10-270055 A (Mitsubishi Electric Corp.)

Form PCT/ISA/210 (extra sheet) (July 1998)

<table>
<tr><td>**INTERNATIONAL SEARCH REPORT**</td><td>International application No.<br>PCT/JP01/11601</td></tr>
</table>

1998. 10. 09, JP 10-270056 A (Mitsubishi Electric Corp.)1998. 10. 09, and therefore cannot be a special technical feature. Thus, there exists no special technical feature so linking as to form a general inventive concept between the invention of claim 38 and that of claim 39 described by citing the description of claim 38, and among the invention of claim 39 and those of claims 40, 44-46 described by citing the description of claim 39. The invention an electrochemical device, of an electrochemical device of Claim 49 is described in prior art documents such as JP 7-134995 A (Toyota Central R&R Labs, Inc. & Toyota Motor Corp.) 1995. 05. 23, JP 10-270055 A (Mitsubishi Electric Corp.) 1998. 10. 09, JP 10-270056 A (Mitsubishi Electric Corp.) 1998. 10. 09, and therefore cannot be a special technical feature. Thus, there exists no special technical feature so linking as to form a general inventive concept among the invention of claims 49 and those of claims 58, 62, 63 described by citing the description of claim 49. An electrochemical device of claim 54 is described in prior art documents such as JP 7-134995 A (Toyota Central R&R Labs, Inc. & Toyota Motor Corp.) 1995. 05. 23, and therefore cannot be a special technical feature. Thus, there exists no special technical feature so linking as to form a general inventive concept between the invention of claims 54 and that of claim 55 described by citing the description of claim 54.

The examination of the claims of this international application from the viewpoint of the specific forms of the inventions of the independent claim results in that the claims of this international application are divided into 47 divisions: 1; 2; 3; 4-6; 7; 8; 9; 10; 11; 12-15; 16; 17; 18; 19; 20-22; 23; 24; 25; 26; 27; 28; 29; 30-32; 33; 34; 35; 36; 37; 38; 39; 40-43; 44; 45; 46, 47; 48; 49; 50; 51-53; 54; 55; 56; 57; 58-61; 62; 63; 64; 65.

Claims 4, 20, 30, 51 are linked in the subject matter "an electroconductive ion conductor produced by bonding an ion conductive group to an electroconductive powder wherein the bonding amount of ion conductive group is 0.001-0.3 mol per mol of a constituent substance of the electroconductive powder". Claims 9, 25, 35, 56 are linked in the subject matter "an electroconductive ion conductor produced by bonding an ion conductive group to an electroconductive powder, or by depositing an ion conductor on an electroconductive powder, wherein the grain diameter of the electroconductive powder is 1-10nm". Claims 10, 26, 36, 57 are linked in the subject matter "an electroconductive ion conductor produced by bonding an ion conductive group to an electroconductive powder, or by depositing an ion conductor on an electroconductive powder wherein the electric resistance of the electroconductive powder is $10^{-3}$ Ω · m or less". Claims 11, 27, 37 are linked in the subject matter "an electroconductive ion conductor produced by bonding an ion conductive group to an electroconductive powder, or by depositing an ion conductor to an the electroconductive powder of carbon the oil absorption amount of which is 200ml/100g or more or the specific surface of which is 300mm$^2$/g or more." Claims 12, 40, 58 are linked in the subject matter "a gas diffusive electrode comprising an electroconductive ion conductor which is produced by bonding an ion conductive group to an electroconductive powder, or by depositing an ion conductor on an electroconductive powder and to which a catalyst is adhered, wherein the catalyst is adhered by physical film formation." These subject matters cannot be denied to be special technical features.

The above-mentioned examination results in that the claims of this international application are divided into 34 divisions: 1; 2; 3; 4-6, 20-22, 30-32, 51-53; 7; 8; 9, 25, 35, 56; 10, 26, 36, 57; 11, 27, 37; 12-15, 40-43, 58-61; 16; 17; 18; 19; 23; 24; 28; 29; 33; 34; 38; 39; 44; 45; 46; 47; 48; 49; 50; 54; 55; 62; 63; 64; 65.

Form PCT/ISA/210 (extra sheet) (July 1998)

| INTERNATIONAL SEARCH REPORT | International application No. |
|---|---|
| | PCT/JP01/11601 |

As mentioned above, the group of inventions of claims 1-65 of this international application involves two different technical features "an electroconductive ion conductor produced by bonding an ion conductive group to an electroconductive powder" and "an electroconductive ion conductor formed by depositing the ion conductor on an electroconductive powder". That is, each of claims defines two inventions with different technical features. Therefore, the Claims divided into 34 divisions comprise 68 inventions.

However, for example, the invention of claim 4 described by citing the description of claim 1, the one of the two invenntions "an electroconductive ion conductor produced by depositing an ion conductor on an electroconductive powder is just the same as the invention of claim 1. Therefore, it is rational that inventions are increased by Claim 4 by one. Similarly, it is rational inventions are increased by Claims 7,8,29, 23, 24, 30, 34, 51, 54, 55 one by one.

Consequently the claims of this international application are divided into 34 divisions: 1; 2; 3; 4-6, 20-22, 30-32,51-53; 7; 8; 9, 25, 35, 56; 10, 26, 36, 57; 11, 27, 37; 12-15, 40-43, 58-61; 16; 17; 18; 19; 23; 24; 28; 29; 33; 34; 38; 39; 44; 45; 46; 47; 48; 49; 50; 54; 55; 62; 63; 64; 65. The number of inventions is increased by these divisions 4-6, 20-22, 30-32, 51-53, 7, 8, 23, 24, 33, 34, 54, 55 one by one, and by the other divisions two by two, so that 59 inventions are defined by claims 1-65 of this international application.

Form PCT/ISA/210 (extra sheet) (July 1998)